# EUROPÄISCHE PATENTSCHRIFT

(11) **EP 1 321 277 B1**
(45) Veröffentlichungstag und Bekanntmachung des Hinweises auf die Patenterteilung: **23.08.2006**
(21) Anmeldenummer: 02027336.3
(22) Anmeldetag: 07.12.2002
(51) Int. Cl.: B29C 45/84

(54) **Verfahren zum Sichern von Gefahrenbereichen an Spritzgiessmaschinen**
Process to protect dangerous areas of injection moulding machines
Procédé pour protéger les zones dangereuses des presses à injecter

(30) Priorität: 21.12.2001 DE 10163443
(43) Veröffentlichungstag der Anmeldung: 25.06.2003
(73) Patentinhaber: Krauss-Maffei Kunststofftechnik GmbH, 80997 München (DE)
(72) Erfinder: Decker, Robert, 81247 München (DE)
(74) Vertreter: Zollner, Richard

(56) Entgegenhaltungen:
- GEBAUER W ET AL: "ELEKTRISCH - ABER SICHER! ANFORDERUNGEN AN DI KONSTRUKTION ELEKTRISCHER SPRITZGIESSMASCHINEN" , KUNSTSTOFFE, CARL HANSER VERLAG. MUNCHEN, DE, VOL. 91, NR. 12, PAGE(S) 44-47 XP001110752 ISSN: 0023-5563 * Seite 45, Spalte 1, Zeile 1 - Seite 46, Spalte 1, Zeile 3; Abbildungen 1,2 *
- PATENT ABSTRACTS OF JAPAN vol. 2000, no. 05, 14. September 2000 (2000-09-14) -& JP 2000 037758 A (NISSEI PLASTICS IND CO), 8. Februar 2000 (2000-02-08)
- PATENT ABSTRACTS OF JAPAN vol. 010, no. 189 (M-494), 3. Juli 1986 (1986-07-03) -& JP 61 032731 A (FANUC LTD), 15. Februar 1986 (1986-02-15)

## Beschreibung

Spritzgießmaschinen weisen in der Regel eine bewegliche Formaufspannplatte auf, die mit Bezug auf ein Maschinenbett und eine feste Formaufspannplatte bewegbar ist, wobei die Formaufspannplatten zwischen sich Formwerkzeughälften tragen, in denen Kunststoffteile ausgebildet werden.

Der Verschiebebereich der beweglichen Formausfspannplatte stellt für Bedienungspersonen im Betrieb einen Gefahrenbereich dar, und er ist deshalb von einer Schutzverkleidung mit einer verriegelten Tür umgeben. Aus Sicherheitsgründen wird gefordert, daß die Verriegelung der Schutztür nur dann aufgehoben und der Zugang zum Gefahrenbereich ermöglicht wird, wenn zumindest zwei unabhängig voneinander erzeugte Signale anzeigen, daß die bewegliche Formaufspannplatte nicht bewegt wird. Das erste Signal kann beispielsweise ein Signal von einem Antriebsmotor für die bewegliche Formaufspannplatte sein; das zweite Signal kann ein Signal eines Weggebers an der beweglichen Formaufspannplatte sein.

Demgegenüber liegt der Erfindung die Erkenntnis zugrunde, daß der Antrieb aus einem Motor und einem Antriebsstrang zum Bewegen des Bauteils wie eine bewegliche Formaufspannplatte in der Regel mehrere unterschiedliche Funktionselemente aufweist, die im Betrieb zusammenwirken. Erfindungsgemäß wird vorgeschlagen, mindestens zwei Funktionselemente zu überwachen und den Gefahrenbereich nur dann zugänglich zu machen, wenn die Funktionselemente gleichzeitig in einem Zustand sind, in dem eine Bewegung des Bauteils über den Antrieb nicht möglich ist.

Dabei kann beispielsweise die Drehzahl eines Motors, der Verriegelungszustand einer Kupplung, die Drehzahl einer Spindel oder einer Spindelmutter, der Druck in einem Hydraulikzylinder, die Stellung eines Hydraulikventils oder dergleichen überwacht werden.

Erfindungsgemäß kann zuverlässig sichergestellt werden, daß der Gefahrenbereich nur dann zugänglich ist, wenn sich das entsprechende Bauteil nicht bewegt.

Gegebenenfalls kann eine zusätzliche Sicherung des Gefahrenbereichs vorgesehen werden, indem zwei unabhängig voneinander wirkende Schutzeinrichtungen zwangsweise von der Schutztür bei deren Öffnung betätigt und aktiviert werden (Gebauer W. et.al., ELEKTRISCH - ABER SICHER! ANFORDERUNGEN AN DIE KONSTRUKTION ELEKTRISCHER SPRITZGIESSMASCHINEN". Kunststoffe. Carl Hanser Verlag, München, DE. Vol.91. Nr.12. Seiten 44-47, XP001110752, ISSN: 0023-5563).

Da die bewegliche Formaufspannplatte in der Regel das größte verschiebbare Element einer Spritzgießmaschine ist, wird das erfindungsgemäße Verfahren vorzugsweise zum Sichern des Verschiebebereichs der beweglichen Formaufspannplatte eingesetzt. Grundsätzlich kann es aber zum Sichern anderer Bereiche im Bereich des Auswerfers oder des Spritzaggregats eingesetzt werden.

Da erfindungsgemäß Funktionselemente des Antriebs zur Sicherung verwendet werden, kann auf einen zusätzlichen Weggeber verzichtet werden.

Eine Ausführungsform der Erfindung wird anhand der beigefügten Zeichnung erläutert, die eine 2-Plattenschließeinheit einer Spritzgießmaschine in teilweise weggebrochener Seitendarstellung zeigt.

Die 2-Plattenschließeinheit umfaßt eine feststehende Formaufspannplatte 16 und eine bewegliche Formaufspannplatte 3. Die Formaufspannplatten 3, 16 sind über vier Gewindespindeln 14, 15 miteinander verbunden, wobei in der Darstellung nur zwei Gewindespindeln sichtbar sind. Die Gewindespindeln sind durch die bewegliche Formaufspannplatte geführt.

An der beweglichen Aufspannplatte 3 sind Spindelmuttern 2 drehbar montiert, die in Eingriff mit dem Gewindeabschnitt der Gewindespindeln stehen und über einen Zahnriemen 13 von einem Elektromotor I in Drehung versetzt werden können. Zwischen den Gewindemuttern 2 und der beweglichen Aufspannplatte 3 sind lösbare Zahnkupplungen 4 vorgesehen, die eine kraftschlüssige Verbindung zwischen der Formaufspannplatte und den Spindelmuttern 2 herstellen können.

An der feststehenden Aufspannplatte 16 sind die Enden der Gewindespindeln derart gelagert, daß sie im wesentlichen keine bzw. nur eine für einen Verriegelungshub erforderliche Axialbewegung durchführen können und gegen Verdrehung gesichert sind.

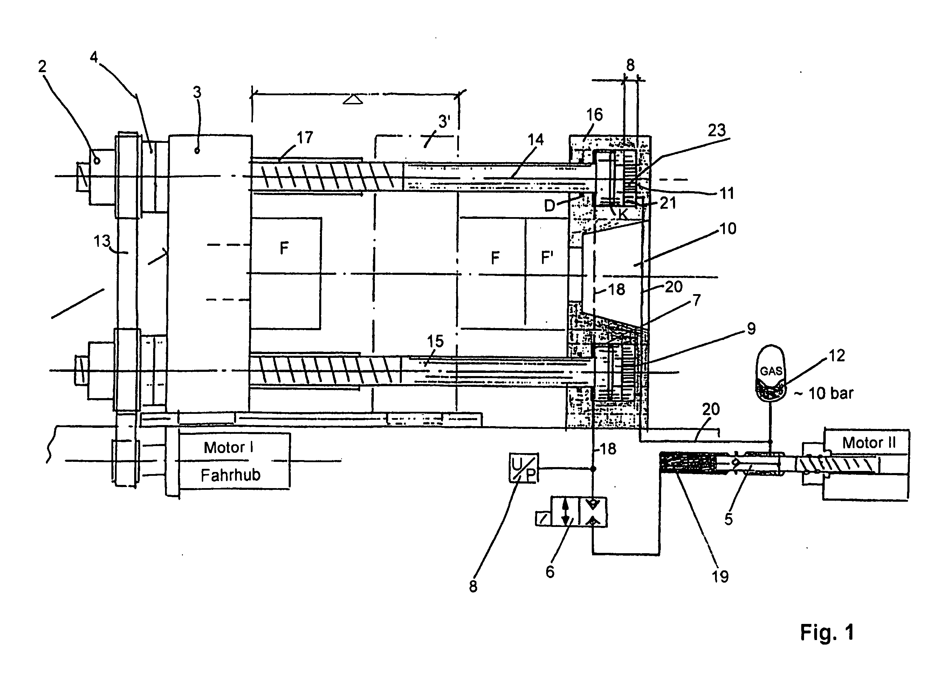

In der Figur 1 sind schematisch zwei Formhälften F und F' dargestellt, die von der beweglichen Formaufspannplatte 3 bzw. der feststehenden Formaufspannplatte 16 getragen werden.

Zum Verschließen der Form werden die Zahnhkupplungen gelöst, der Motor I betreibt über den Zahnriemen 13 die Gewindemuttern 2 und verschiebt somit die bewegliche Formaufspannplatte 3 zum Verschließen der Form (nach rechts in der Figur) über den Fahrhub und dem Formhöhenausgleich Δ, bis die Formhälften F und F' aneinanderliegen und somit die Form verschlossen ist. Die Position der beweglichen Aufspannplatte 3 ist dabei mit gestrichelten Linien als 3' in der Figur dargestellt.

Die in der festen Formaufspannplatte gelagerten Enden der Spindeln bilden einen Teil einer Hydraulikzylindereinheit zum Aufbringen eines erhöhten Schließdrucks. Nachdem das Werkzeug durch die Betätigung des Motors I verschlossen wurde, werden die Zahnkupplungen geschlossen, um zu verhindern, daß sich die bewegliche Formaufspannplatte beim Aufbau der hohen Schließkraft bewegt. Anschließend wird über ein Hydrauliksystem aus einem Verdrängerkolben 5 und Leitungen 18 Hydraulikmittel an die Kolben angelegt, die sich somit zum Aufbringen der erhöhten Schließkraft verschieben.

Der Motor I, der Zahnriemen 13, die Spindelmuttern 2 und die Kupplungen stellen jeweils unabhängige Funktionselemente des Antriebs der beweglichen Formaufspannplatte 3 dar und können als solche zur Sicherung verwendet werden.

In der bevorzugten Ausführungsform wird die Drehzahl des Motors M überwacht. Das zweite Funktionselement ist dabei eine aktive elektromagnetische Zahnkupplung, deren eingerasteter und somit verriegelter Zustand überwacht wird. Dazu ist an der Zahnkupplung ein Signalgeber vorgesehen, der ein Signal nur im verriegelten Zustand generiert, d.h. bei Stillstand der beweglichen Aufspannplatte. Da die Verriegelung bei jedem Zyklus erforderlich ist, erfolgt eine entsprechende zyklische Überwachung. Daneben wird die Drehzahl des Motors I über einen Absolutgeber am Motor überwacht

Nicht dargestellt ist in der Figur eine Verkleidung, die mindestens den Gefahrenbereich, d.h. den Verschiebebereich der beweglichen Aufspannplatte, d.h. in der Figur den Bereich vom linken Ende der Spindeln bis zur festen Formaufspannplatte, nach außen abschließt, wobei im Gefahrenbereich eine Schutztür angeordnet ist.

Um die Schutztür im Gefahrenbereich öffnen zu können, wird zunächst eine entsprechende Anforderung über einen im Griff der Schutztür integrierten Betätiger ausgelöst. Der Betrieb des Motors I wird angehalten; wenn die Drehzahl "0" erreicht ist (Erkennung über Absolutwertgeber am Antriebsmotor) und die bewegliche Formaufspannplatte sich nicht mehr bewegt (Erkennung über das Signal, daß die Zahnkupplung eingerastet und verriegelt ist), wird die Zuhaltung der Schutztür freigegeben. Gleichzeitig kann beispielsweise über eine Anzeige dem Bediener ein Signal gegeben werden, daß die Schutztür geöffnet werden kann.

Die Ver- und Entriegelung der Schutztür erfolgt vorzugsweise über elektromagnetisch betätigte Bolzen.

Um die Sicherheit noch weiter zu erhöhen, sollte vorzugsweise neben der Überwachung der Drehzahl des Motors das gleichzeitige Einrasten der vier Zahnkupplungen überwacht werden. Durch Überwachung eines Sensors an der Schutztür soll sichergestellt werden, daß der Motor bei geöffneter Schutztür nicht anlaufen kann.

Nicht in der Figur dargestellt ist eine Auswerfervorrichtung, die (in der Figur) links neben der beweglichen Formaufspannplatte angeordnet ist, sowie ein Spritzgießaggregat, das (in der Figur) rechts neben der festen Formaufspannplatte angeordnet ist. Auch diese Vorrichtungen können mit Verkleidungen und Schutztüren sowie entsprechenden Sicherheitsvorrichtungen versehen sein.

Die technische Implementierung des erfindungsgemäßen Verfahrens ist dem Fachmann geläufig, d.h. es müssen entsprechende Geber zur Überwachung der Funktionselemente vorhanden sein, die jeweilige Signale an eine Steuerung zur Ansteuerung des Verriegelung der Schutztür geben.

## Patentansprüche

1. Verfahren zum Sichern eines Gefahrenbereiches einer Spritzgießmaschine mit mindestens einem über einen Antrieb beweglichen Bauteil, wobei der Antrieb mehrere unterschiedliche Funktionselemente aufweist, **dadurch gekennzeichnet, daß** man mindestens zwei Funktionselemente überwacht und den Zugang zum Gefahrenbereich nur dann freigibt, wenn die überwachten Funktionselemente gleichzeitig in einem Zustand sind, in dem eine Bewegung des beweglichen Bauteils über den Antrieb nicht möglich ist.

2. Verfahren nach Anspruch 1, **dadurch gekennzeichnet, daß** das bewegliche Bauteil eine Formaufspannplatte ist.

3. Verfahren nach Anspruch 1 oder 2, **dadurch** gekennzeichnmet, daß eins der Funktionselemente ein Motor (I) ist, dessen Drehzahl überwacht wird.

4. Verfahren nach Anspruch 1 oder 2, **dadurch gekennzeichnet, daß** eins der Funktionselemente eine lösbare Kupplung (4) im Antriebsstrang zwischen Motor und dem beweglichen Bauteil ist, deren Verriegelungszustand überwacht wird.

5. Verfahren nach Anspruch 1, 2, 3 oder 4, **dadurch gekennzeichnet, daß** eins der Funktionselemente eine Spindelmutter (2) eines Kugelspindelantriebs ist, deren Drehung überwacht wird.

6. Verfahren nach einem der Ansprüche 1 bis 4, **dadurch gekennzeichnet, daß** eins der Funktionselemente ein Hydraulikzylinder ist, dessen Druck übewacht wird.

7. Verfahren anch einem der Ansprüche 1 bis 6, **dadurch gekennzeichnet, daß** eins der Funktionselemente ein Hydraulikventil ist, dessen Stellung überwacht wird.

## Claims

1. A process for protecting a dangerous area of an injection moulding machine comprising at least one component which can be moved by means of a drive, wherein the drive has a plurality of different functional elements, **characterised in that** at least two functional elements are monitored and access to the dangerous area is only released when the monitored functional elements are simultaneously in a state in which a movement of the movable component by means of the drive is not possible.

2. The process according to claim 1, **characterised in that** the movable component is a mould clamping plate.

3. The process according to claim 1 or claim 2, **characterised in that** one of the functional elements is a motor (I) whose speed is monitored.

4. The process according to claim 1 or claim 2, **characterised in that** one of the functional elements is a detachable coupling (4) in the drive train between motor and movable component whose locking state is monitored.

5. The process according to claim 1, 2, 3 or 4, **characterised in that** one of the functional elements is a spindle nut (2) of a ball screw drive whose rotation is monitored.

6. The process according to any one of claims 1 to 4, **characterised in that** one of the functional elements is a hydraulic cylinder whose pressure is monitored.

7. The process according to any one of claims 1 to 6, **characterised in that** one of the functional elements is a hydraulic valve whose position is monitored.

## Revendications

1. Procédé de sécurisation d'une zone à risque d'une machine de moulage par injection comportant au moins une pièce de construction mobile à l'aide d'une propulsion, la propulsion comprenant plusieurs éléments fonctionnels différents, **caractérisé en ce qu'**on surveille au moins deux éléments fonctionnels et qu'on ne libère l'accès à la zone à risque que si les éléments fonctionnels surveillés sont en même temps dans un état où un mouvement de la pièce de construction mobile à l'aide de la propulsion n'est pas possible.

2. Procédé selon la revendication 1, **caractérisé en ce que** la pièce de construction mobile est une plaque de montage de moule.

3. Procédé selon la revendication 1 ou 2, **caractérisé en ce qu'**un des éléments fonctionnels est un moteur (I) dont le régime est surveillé.

4. Procédé selon la revendication 1 ou 2, **caractérisé en ce qu'**un des éléments fonctionnels est un embrayage dissociable (4) placé dans la ligne de transmission entre le moteur et la pièce de construction mobile et dont l'état de verrouillage est surveillé.

5. Procédé selon la revendication 1, 2, 3 ou 4, **caractérisé en ce qu'**un des éléments fonctionnels est un écrou de broche (2) d'une transmission à broche à bille dont la rotation est surveillée.

6. Procédé selon une des revendications 1 à 4, **caractérisé en ce qu'**un des éléments fonctionnels est un vérin hydraulique dont la pression est surveillée.

7. Procédé selon une des revendications 1 à 6, **caractérisé en ce qu'**un des éléments fonctionnels est une soupape hydraulique dont la position est surveillée.
